# EUROPÄISCHE PATENTSCHRIFT

(11) **EP 2 133 813 B1**
(45) Veröffentlichungstag und Bekanntmachung des Hinweises auf die Patenterteilung: **05.11.2014**
(21) Anmeldenummer: 09161751.4
(22) Anmeldetag: 03.06.2009
(51) Int. Cl.: G06K 5/00

(54) **Vorrichtung und Verfahren zum Kennzeichnen von Kunststoffbehältnissen**
Device and method for marking plastic containers
Procédé et dispositif de caractérisation de récipients de matière plastique

(30) Priorität: 13.06.2008 DE 102008028376
(43) Veröffentlichungstag der Anmeldung: 16.12.2009
(73) Patentinhaber: Krones AG, 93073 Neutraubling (DE)
(72) Erfinder: Piana, Stefan, 93096, Köfering (DE)
(74) Vertreter: Bittner, Bernhard

(56) Entgegenhaltungen:
- WO-A-2004/038645

## Beschreibung

Die vorliegende Erfindung bezieht sich auf eine Vorrichtung und ein Verfahren zum Kennzeichnen,von Kunststoffbehältnissen. Im Stand der Technik ist es bekannt, dass Kunststoffbehältnisse, wie beispielsweise PET-Flaschen, mit unterschiedlichsten Aufdrucken versehen werden. So ist es bekannt, Farbdrucke auf Kunststoffbehältnisse aufzubringen, es ist jedoch auch bekannt, etwa zur Kennzeichnung eines Ablaufdatums, Stempel an dem Behältnis anzubringen. Dabei ist es wünschenswert, zu prüfen, ob derartige Aufdrucke tatsächlich auf den Behältnissen angebracht wurden.

Aus der EP 0 539 735 A1 ist ein Verfahren und eine Vorrichtung zur Beaufschlagung bewegter Gebinde mit einem Laserstrahl bekannt. Dabei werden PET-Mehrwegflaschen mit einem Laserstrahl beaufschlagt, um die Flaschen zu prüfen und/oder einen Code auf den Flaschen zu lesen. Eine Kontrolle, mit der festgestellt wird, ob der Code tatsächlich auf den Flaschen angebracht wurde, ist jedoch in dieser Druckschrift nicht erwähnt.

Aus der EP 0 295 371 B1 ist eine Inspektionsmaschine für Kunststoffflaschen bekannt. Diese Inspektionsmaschine weist einen optisch-elektrischen Sensor auf, der dazu dient, eine Flaschencodemarkierung in Form von erhabenen Punkten oder Strichen zu erfassen. Derartige Erkennungseinrichtungen sind jedoch sehr aufwändig, da sie auch bei hohen Transportgeschwindigkeiten genau ein spezielles Muster erfassen müssen. Weiterhin ist es aus dem Stand der Technik bekannt, dass mit Hilfe von Bildaufnahmeeinrichtungen jeweils Bilder der Behältnisse aufgenommen werden, um festzustellen, ob die Kennzeichnungen angeordnet wurden. Dabei sind jedoch auch derartige Bildaufnahmeeinrichtungen sehr aufwändig, da sie auch bei hohen Transportgeschwindigkeiten korrekt arbeiten müssen.

Die WO 2004/038645 beschreibt ein Verfahren für eine Vorrichtung zum Überprüfen von Zeichen, die auf Produkten oder Produktverpackungen angebracht wurden. Dabei ist ein System angegeben, welches eine Kennzeichnung auf dem Produkt anbringt, wobei es sich bei dieser Kennzeichnungseinrichtung beispielsweise um einen Tintenstrahldrucker handeln kann. Derartige Vorgehensweisen unter Verwendung von Tintenstrahldruckern sind jedoch im Bereich der getränkeherstellenden Industrie aufgrund der hohen Produktionsgeschwindigkeiten ungeeignet.

Bei den bekannten optischen Kontrollverfahren treten darüber hinaus diverse Schwierigkeiten auf. Zunächst sind die Kontraste bei der Bildaufnahme oft schwach. Daneben wird die Bildaufnahme oft durch einen undefinierten Hintergrund erschwert. Dieser undefinierte Hintergrund kann sich aus Luft, mehr oder weniger grobporigem Schaum oder einem Produkt mit verschiedenen Farb- oder Trübheitsgraden ergeben. Weitere Probleme können sich ergeben, wenn sowohl das Behältnis als auch das Produkt durchsichtig sind. Daneben können auch Fremdlicht und eine geringe Rauhtiefe Schwierigkeiten bei der Messung erzeugen.

Der vorliegenden Erfindung liegt die Aufgabe zugrunde, eine Vorrichtung zum Kennzeichnen von Kunststoffbehältnissen derart auszugestalten, dass eine einfache und kostengünstige Kontrolle von vorgenommenen Aufdrucken möglich ist. Dies wird erfindungsgemäß durch eine Vorrichtung nach Anspruch 1, eine Anlage nach Anspruch 6 und ein Verfahren nach Anspruch 7 erreicht. Vorteilhafte Ausführungsformen und Weiterbildungen sind Gegenstand der Unteransprüche.

Eine erfindungsgemäße Vorrichtung zum Kennzeichnen von Kunststoffbehältnissen weist eine Kennzeichnungseinrichtung auf, welche auf die Behältnisse eine Kennzeichnung anbringt sowie eine Prüfeinrichtung, welche das Vorhandensein der Kennzeichnung auf den Behältnissen überprüft. Erfindungsgemäß weist die Prüfeinrichtung einen temperaturempfindlichen Sensor auf.

Damit wird erfindungsgemäß vorgeschlagen, eine betreffende Kennzeichnung, die üblicherweise mit einer Erhöhung der Temperatur in einem bestimmten Bereich des Behältnisses einhergeht, anhand dieser Temperaturerhöhung zu überprüfen. Der temperaturempfindliche Sensor misst daher, ob lokal in dem Bereich, in dem die Kennzeichnung aufzubringen ist, eine Temperaturerhöhung stattgefunden hat. Bei der Kennzeichnung kann es sich beispielsweise um Daten oder Aufdrucke handeln, es wäre jedoch auch möglich, dass mit Hilfe der Kennzeichnungseinrichtungen größere Bilder auf dem Behältnis angeordnet werden.

Bei dem Kennzeichnungs- oder Datiervorgang mittels Laser wird die Wandung des Behältnisses (kurzfristig) so stark erhitzt, dass das Material lokal oberflächlich aufschmilzt. Daher kann die Kennzeichnung kurz nach dem Anbringen als Warmer Bereich in einem thermischen Abbild erkannt werden. Auf diese Weise ist es möglich, auf eine aufwendige Bildauswertung mit den oben genannten Problemen zu verzichten.

Bei einer vorteilhaften Ausführungsform weist die Vorrichtung eine Transporteinrichtung auf, welche die Kunststoffbehältnisse transportiert und die Prüfeinrichtung ist in der Transportrichtung der Behältnisse stromabwärts bezüglich der Kennzeichnungseinrichtung angeordnet.

Bei einer weiteren vorteilhaften Ausführungsform weist die Kennzeichnungseinrichtung eine Laserbeschriftungseinheit auf. Diese Laserbeschriftungseinheit graviert mittels Laserstrahlen eine Kennzeichnung in eine Wandung der Behältnisse. Durch dieses Anbringen der Kennzeichnung wird die Temperatur in dem besagten Bereich des Behältnisses lokal erhöht und diese Temperaturerhöhung kann mit dem temperaturempfindlichen Sensor aufgenommen werden.

Bei einer weiteren vorteilhaften Ausführungsform ist die Prüfeinrichtung in der Transportrichtung der Behältnisse unmittelbar nach der Kennzeichnungseinrichtung angeordnet. Auf diese Weise kann sichergestellt werden, dass die Temperaturerhöhung des Behältnisses noch messbar ist. Vorzugsweise ist der Abstand der Prüfeinrichtung von der Kennzeichnungseinrichtung kleiner als 500 mm, bevorzugt kleiner als 400 mm, besonders bevorzugt kleiner als 300 mm und besonders bevorzugt zwischen 150 mm und 300 mm.

Vorzugsweise ist der temperaturempfindliche Sensor ein infrarotempfindlicher Halbleitersensor oder ein Thermopile. Ein Thermopile kann beispielsweise Bestandteil eines Pyrometers sein. Ein derartiger Sensor absorbiert Wärmestrahlung und gibt ein für diese Strahlung charakteristisches Signal aus.

Bei der erfindungsgemäßen Ausführungsform ist die Prüfeinrichtung derart gestaltet, dass sie eine Temperatur eines Abschnitts des Behältnisses berührungslos misst.

Die vorliegende Erfindung ist weiterhin auf eine Anlage zum Behandeln von Getränkebehältnissen und insbesondere zum Befüllen von Getränkebehältnissen mit einer Vorrichtung der oben beschriebenen Art sowie einer Befüllungseinrichtung gerichtet, wobei die Befüllungseinrichtung die Behältnisse mit einer Flüssigkeit befüllt. Bevorzugt ist die Befüllungseinrichtung in der Transportrichtung der Behältnisse stromaufwärts bzgl. der Kennzeichnungseinrichtung und damit auch der Prüfeinrichtung angeordnet.

Die vorliegende Erfindung ist weiterhin auf ein Verfahren zum Kennzeichnen von Behältnissen mit Aufdrucken oder Kennzeichnungen gerichtet, wobei in einem ersten Verfahrensschritt eine Kennzeichnung an dem Behältnis mittels einer Kennzeichnungseinrichtung aufgebracht wird und in einem weiteren Verfahrensschritt das Vorhandensein einer Kennzeichnung auf dem Behältnis geprüft wird. Erfindungsgemäß erfolgt die Prüfung des Vorhandenseins der Kennzeichnung mittels eines temperaturempfindlichen Sensors bzw. mittels einer Temperaturmessung.

Damit wird auch bei dem erfindungsgemäßen Verfahren vorgeschlagen, das Vorhandensein der Kennzeichnung über eine Erwärmung des Behältnisses, genauer des Behältnisses in demjenigen Bereich, in dem eine Kennzeichnung aufgebracht wurde oder aufzubringen wäre, festzustellen.

Erfindungsgemäß erfolgt daher die Kennzeichnung mittels thermischer Einwirkung auf das Behältnis. Unter einer thermischen Einwirkung wird dabei auch die Beaufschlagung mit einem Laserstrahl verstanden, der das Material des Behältnisses zumindest lokal erwärmt.

Vorzugsweise wird die Kennzeichnung an einem gefüllten Behältnis angebracht. Insbesondere bei gefüllten Behältnissen ist die vorliegende Erfindung besonders günstig einsetzbar, da derartige gefüllte Behältnisse oftmals schwierig mit herkömmlichen optischen Methoden zu inspizieren sind. Vorzugsweise ist ein Zeitraum zwischen dem Anbringen der Kennzeichnung an dem Behältnis und der Prüfung kleiner als 500 ms, bevorzugt kleiner als 400 ms uns besonders bevorzugt kleiner als 300 ms.

Bei einem weiteren bevorzugten Verfahren enthält die. Kennzeichnung eine Datumsangabe. -

Weitere Vorteile und Ausführungsformen ergeben sich aus der beigefügten Zeichnung:

Darin zeigt:

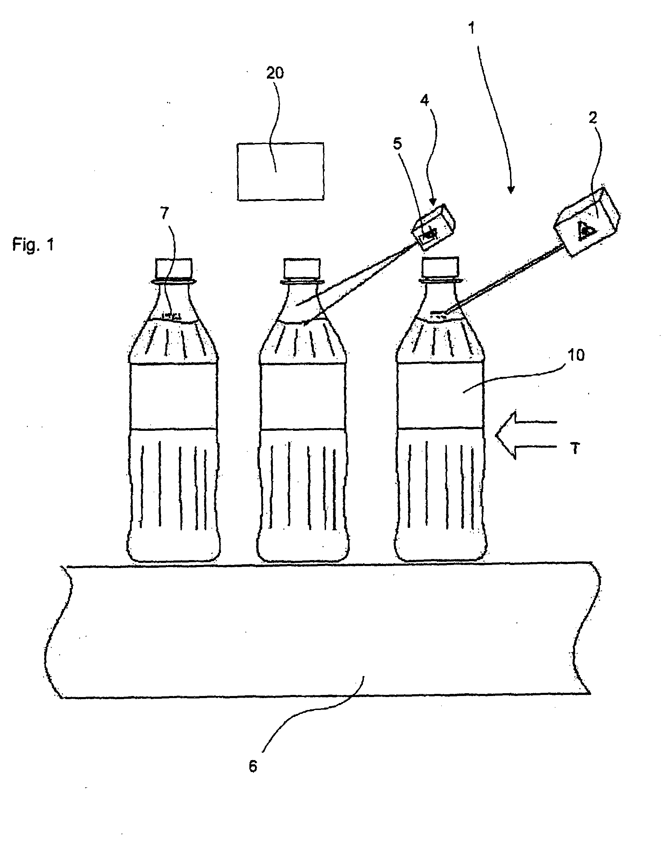

- Fig. 1: eine schematische Darstellung einer erfindungsgemäßen Vorrichtung.

Figur 1 zeigt schematisch eine erfindungsgemäße Vorrichtung 1 zum Kennzeichnen von Kunststoffbehältnissen 10. Dabei bezieht sich das Bezugszeichen 6 auf eine Transporteinrichtung wie ein Transportband, welches die Behältnisse 10 entlang eines vorgegebenen Transportpfades T fördert. Es wäre jedoch auch möglich, dass die Behältnisse 10 nicht mittels eines Transportbandes 6 , sondern beispielsweise mittels einer Vielzahl von Greifklammern gefördert werden.

Das Bezugszeichen 2 bezieht sich auf eine Kennzeichnungseinrichtung, die hier als Laser ausgeführt ist, der Kennzeichnungen an einem Bereich der Behältnisse und hier an einem Halsbereich der Behältnisse 10 anbringt.

Es wäre jedoch auch möglich, dass die Kennzeichnungseinrichtung 2 die Kennzeichnungen in einem Bodenbereich der Behältnisse oder einem mittleren Bereich der Behältnisse anbringt. In der Transportrichtung der Behältnisse nach dieser Kennzeichnungseinrichtung 2 ist eine Prüfeinrichtung 4 vorgesehen, welche prüft, ob eine Kennzeichnung 7 auf den Behältnissen angebracht wurde. Falls eine solche Kennzeichnung 7 angebracht wurde, weist das Behältnis an dem entsprechenden Bereich eine höhere Temperatur auf, welche wiederum von der Prüfeinrichtung 4 erfasst werden kann. Das Bezugszeichen 5 bezieht sich auf einen temperaturempfindlichen Sensor der Prüfeinrichtung 4.

Damit wird vorgeschlagen, an der Transporteinrichtung 6. kurz hinter der Kennzeichnungseinrichtung die Prüfeinrichtung 4 anzubringen. Bevorzugt weist diese Prüfeinrichtung bzw. der Sensor einen Messfleck mit einigen mm Durchmesser auf. Die Prüfeinrichtung gibt bevorzugt an einem Analogausgang ein Signal aus, welches ein thermisches Schnittprofil wiederspiegelt. Je nach dem, ob die Flasche bzw. deren Wandung erwärmt wurde, zeigt das Profil jeder Flasche einen unterschiedlich hohen Ausschlag.

Vorzugsweise wird als Prüfeinrichtung ein Infrarotsensor verwendet, der eine kurze Erfassungszeit im Bereich von ca. 3 ms oder kürzer aufweist. Auch erlaubt die Prüfeinrichtung bevorzugt eine kontinuierliche Prozessbeobachtung. Die Prüfeinrichtung ermöglicht ferner ein schnelles Scannen entlang einer Linie beispielsweise in der Längsrichtung der Behältnisse um auf diese Weise schnell und zuverlässig Hotspots auffinden zu können.

Es wäre auch möglich, dass sich die Prüfeinrichtung 4 entlang eines kurzen Abschnitts des Transportpfades mit den Behältnissen 10 mitbewegt oder dass mehrere Prüfeinrichtungen vorgesehen sind, beispielsweise für mehrzeiligen Aufdruck.

Das Bezugszeichen 20 bezieht sich auf eine Prozessoreinrichtung, welche die von der Prüfeinrichtung ausgegebenen Messwerte aufnimmt und mit gespeicherten Werten vergleicht. So ist es möglich, dass in einem Speicher dieser Prozessoreinrichtung Grenzwerte für die Temperatur der Behältnisse abgelegt sind und aufgrund eines Vergleichs mit diesen Grenzwerten festgestellt werden kann, ob eine Erwärmung des jeweiligen Behältnisses 10 vorliegt und damit auch ob die Kennzeichnung 7 an dem Behältnis angebracht wurde. Dabei kann eine derartige Prozessoreinrichtung 20 ggf. auch weitere Parameter, wie eine Außentemperatur oder auch eine Transportgeschwindigkeit des Transportbandes 6 berücksichtigen.

Es wären auch Transporteinrichtungen denkbar, bei denen die Behältnisse nicht nur entlang eines Transportpfades T geführt werden, sondern auch gedreht werden. In diesem Falle wäre es zusätzlich möglich, die Prüfeinrichtung 4 in einem anderen Bereich in der Umfangsrichtung der Behältnisse 10 anzuordnen um wiederum erwärmte Stellen detektieren zu können. Auch wäre es möglich, mehrere Prüfeinrichtungen 4 in Umfangsrichtung um die Behältnisse 10 anzuordnen und es könnten auch mehrere Kennzeichnungseinrichtungen 2 vorgesehen sein, welche die Behältnisse an unterschiedlichen Stellen sowohl in der Längsrichtung der Behältnisse als auch in der Umfangsrichtung der Behältnisse markieren.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Kennzeichnen von Kunststoffbehältnissen (10) mit einer Kennzeichnungseinrichtung (2), welche geeignet ist zur Aufbringung einer Kennzeichnung (7) auf die Behältnisse (10) mittels thermischer Einwirkung und einer Prüfeinrichtung (4), welche das Vorhandensein der Kennzeichnung (7) auf den Behältnissen (10) überprüft, **dadurch gekennzeichnet, dass** die Prüfeinrichtung (4) einen temperaturempfindlichen Sensor (5) aufweist der geeignet ist für eine berührungslose Messung der Temperatur des Abschnittes des Behältnisses (10) wo die Kennzeichnung (7)angebracht wird.

2. Vorrichtung (1) nach Anspruch 1, **dadurch gekennzeichnet, dass** die Vorrichtung (1) eine Transporteinrichtung (6) aufweist und die Prüfeinrichtung (4) in der Transportrichtung (T) der Behältnisse (10) stromabwärts bezüglich der Kennzeichnungseinrichtung (2) angeordnet ist.

3. Vorrichtung (1) nach wenigstens einem der vorangegangenen Ansprüche, **dadurch gekennzeichnet, dass** die Kennzeichnungseinrichtung (2) eine Laserbeschriftungseinheit aufweist.

4. Vorrichtung (1) nach wenigstens einem der vorangegangenen Ansprüche, **dadurch gekennzeichnet, dass** die Prüfeinrichtung (4) in der Transportrichtung der Behältnisse (10) unmittelbar nach der Kennzeichnungseinrichtung (2) angeordnet ist.

5. Vorrichtung (1) nach wenigstens einem der vorangegangenen Ansprüche, **dadurch gekennzeichnet, dass** der temperaturempfindliche Sensor (5) einen infrarotempfindlichen Halbleitersensor oder ein Thermopile enthält.

6. Anlage zum Behandeln und insbesondere zum Abfüllen von Getränkebehältnissen (10) mit einer Vorrichtung (1) nach wenigstens einem der vorangegangenen Ansprüche und einer Befüllungseinrichtung, welche die Behältnisse (10) mit einer Flüssigkeit befüllt.

7. Verfahren zum Kennzeichnen von Behältnissen (10) mit Kennzeichnungen mit den Schritten:
- Anbringen einer Kennzeichnung (7) an dem Behältnis (10) mittels thermischer Einwirkung auf das Behältnis (10) und mittels einer Kennzeichnungseinrichtung (2);
- Prüfen des Verhandenseins der Kennzeichnung (7) auf dem Behältnis (10) **dadurch gekennzeichnet, dass** die Prüfung des Vorhandenseins der Kennzeichnung (7) mittels eines Temperaturempfindlichen Sensors (5) erfolgt, der die Temperatur des Abschnittes des Behältnisses (10), wo die Kennzeichnung (7) angebracht wird, berührungslos misst.

8. Verfahren nach wenigstens einem der vorangegangenen Ansprüche, **dadurch gekennzeichnet, dass** die Kennzeichnung (7) an einem gefüllten Behältnis (10) angebracht wird.

9. Verfahren nach wenigstens einem der vorangegangenen Ansprüche, **dadurch gekennzeichnet, dass** ein Zeitraum zwischen dem Anbringen der Kennzeichnung (7) an dem Behältnis (10) und der Prüfung kleiner ist als 500ms, bevorzugt kleiner als 400ms und besonders bevorzugt kleiner als 300ms.

10. Verfahren nach wenigstens einem der vorangegangenen Ansprüche, **dadurch gekennzeichnet, dass** die Kennzeichnung (7) eine Datumsangabe enthält.

## Claims

1. Apparatus (1) for marking plastics material containers (10), comprising a marking device (2) which is able to apply a marking (7) onto the containers (10) by means of thermic impact and a checking device (4) which checks for the presence of the marking (7) on the containers (10), **characterised in that** the checking device (4) comprises a temperature-sensitive sensor (5) which is able to measure the temperature of a section of the container (10), where the marking (7) is applied, in a contactless manner.

2. Apparatus (1) according to claim 1, **characterised in that** the apparatus (1) comprises a transport device (6) and the checking device (4) is arranged downstream with respect to the marking device (2) in the transport direction (T) of the containers (10).

3. Apparatus (1) according to at least one of the preceding claims, **characterised in that** the marking device (2) comprises a laser inscription unit.

4. Apparatus (1) according to at least one of the preceding claims, **characterised in that** the checking device (4) is arranged immediately after the marking device (2) in the transport direction of the containers (10).

5. Apparatus (1) according to at least one of the preceding claims, **characterised in that** the temperature-sensitive sensor (5) contains an infrared-sensitive semiconductor sensor or a thermopile.

6. Installation for treating and in particular for filling beverage containers (10), comprising an apparatus (1) according to at least one of the preceding claims and a filling device which fills the containers (10) with a liquid.

7. Method for marking containers (10) with markings, comprising the steps:
- applying a marking (7) to the container (10) by means of thermic impact onto the container (10) and by means of a marking device (2);
- checking for the presence of the marking (7) on the container (10), **characterised in that** the checking for the presence of the marking (7) takes place by means of a temperature-sensitive sensor (5), which measures the temperature of a section of the container (10), where the marking (7) is applied, in a contactless manner.

8. Method according to at least one of the preceding claims, **characterised in that** the marking (7) is applied to a filled container (10).

9. Method according to at least one of the preceding claims, **characterised in that** a time period between the application of the marking (7) to the container (10) and the checking is less than 500 ms, preferably less than 400 ms and particularly preferably less than 300 ms.

10. Method according to at least one of the preceding claims, **characterised in that** the marking (7) contains a date indication.

## Revendications

1. Dispositif (1) pour le marquage de récipients en matière plastique (10), avec un dispositif de marquage (2) apte à appliquer un marquage (7) par sollicitation thermique sur les récipients (10), et un dispositif de contrôle (4) vérifiant la présence du marquage (7) sur les récipients (10), **caractérisé en ce que** le dispositif de contrôle (4) comporte un capteur thermosensible (5), lequel est apte à une mesure sans contact de la température de la partie du récipient (10) où le marquage (7) est appliqué.

2. Dispositif (1) selon la revendication 1, **caractérisé en ce que** ledit système (1) comprend un dispositif de transport (6), et **en ce que** le dispositif de contrôle (4) est disposé en aval du dispositif de marquage (2) dans la direction de transport (T) des récipients (10).

3. Dispositif (1) selon au moins une des revendications précédentes, **caractérisé en ce que** le dispositif de marquage (2) comprend une unité de gravure laser.

4. Dispositif (1) selon au moins une des revendications précédentes, **caractérisé en ce que** le dispositif de contrôle (4) est disposé immédiatement après le dispositif de marquage (2) dans la direction de transport des récipients (10).

5. Dispositif (1) selon au moins une des revendications précédentes, **caractérisé en ce que** le capteur thermosensible (5) comprend un capteur à semi-conducteur sensible aux infrarouges ou une thermopile.

6. Installation pour le traitement et en particulier pour le remplissage de récipients pour boissons (10), avec un dispositif (1) selon au moins une des revendications précédentes et un dispositif de remplissage versant un liquide dans les récipients (10).

7. Procédé de marquage de récipients (10), comprenant les étapes suivantes:
- application d'un marquage (7) sur le récipient (10) par sollicitation thermique sur le récipient (10) et au moyen d'un dispositif de marquage (2) ;
- contrôle de présence du marquage (7) sur le récipient (10), **caractérisé en ce que** le contrôle de présence du marquage (7) est effectué au moyen d'un capteur thermosensible (5) mesurant sans contact la température de la partie du récipient (10) où le marquage (7) est appliqué.

8. Procédé selon au moins une des revendications précédentes, **caractérisé en ce que** le marquage (7) est appliqué sur un récipient (10) rempli.

9. Procédé selon au moins une des revendications précédentes, **caractérisé en ce qu'**un intervalle temporel entre l'application du marquage (7) sur le récipient (10) et le contrôle est inférieur à 500 ms, avantageusement inférieur à 400 ms et préférentiellement avantageusement inférieur à 300 ms.

10. Procédé selon au moins une des revendications précédentes, **caractérisé en ce que** le marquage (7) comporte une indication de date.
